(19) Europäisches Patentamt
European Patent Office
Office européen des brevets

(11) **EP 1 978 153 A1**

(12) **EUROPEAN PATENT APPLICATION**
published in accordance with Art. 158(3) EPC

(43) Date of publication:
**08.10.2008 Bulletin 2008/41**

(51) Int Cl.:
**D06N 3/00** (2006.01)

(21) Application number: **07706747.8**

(22) Date of filing: **15.01.2007**

(86) International application number:
**PCT/JP2007/050413**

(87) International publication number:
**WO 2007/081003 (19.07.2007 Gazette 2007/29)**

(84) Designated Contracting States:
**DE FR GB IT**

(30) Priority: **16.01.2006 JP 2006007796**

(71) Applicant: **Kuraray Co., Ltd.**
**Okayama 710-8622 (JP)**

(72) Inventors:
• **FUJISAWA, Michinori**
**Kurashiki-shi, Okayama 710-8622 (JP)**

• **TANAKA, Jiro**
**Kurashiki-shi, Okayama 710-8622 (JP)**
• **ANDO, Yoshiyuki**
**Kurashiki-shi, Okayama 710-8622 (JP)**

(74) Representative: **Vossius & Partner**
**Siebertstrasse 4**
**81675 München (DE)**

(54) **BASE MATERIAL FOR ARTIFICIAL LEATHER AND METHOD OF PRODUCING THE SAME**

(57)     A substrate for artificial leathers which is composed of a united laminate of a nonwoven fabric layer A made of bundles of microfine fibers having an average single fiber fineness of 0.5 dtex or less and a cushion layer B made of an elastic polymer sheet. Apart of the microfine fibers constituting the nonwoven fabric layer A is allowed to penetrate through the cushion layer B to form a microfine fiber layer C on the outer surface of the cushion layer B. The inner surface of the elastic polymer sheet is undulated with a height difference of 100 $\mu$m or more in a thickness direction. Between the undulated surface of the elastic polymer sheet and the nonwoven fabric layer A, voids having a height of 100 $\mu$m or more in a thickness direction are formed. Using the substrate for artificial leathers, grain-finished artificial leathers which combine a softness without resistance and a stiff hand resembling natural sheep leathers and have bent wrinkles with fullness are produced.

Fig. 2

EP 1 978 153 A1

**Description**

TECHNICAL FIELD

The present invention relates to a substrate for artificial leathers composed of a nonwoven fabric made of microfine fiber bundles and an elastic polymer impregnated therein. More specifically, the present invention relates to a substrate for artificial leathers capable of producing a grain-finished artificial leather which combines a softness without resistance and a stiff hand resembling natural sheep leathers and has bent wrinkles with fullness.

BACKGROUND ART

Artificial leathers have come to be widely used in the fields of clothes, general materials, sports, etc. because their advantages such as light weights and easiness of handling have been accepted by consumers. Known general substrates for artificial leathers have been produced by a method roughly including a step of making microfine fiber-forming composite fibers made of two kinds of polymers having different solubilities into staples; a step of making the staples into a web by using a card, crosslapper, random webber, etc.; a step of entangling the fibers by needle punching, etc. to obtain a nonwoven fabric; and a step of impregnating a solution or emulsion of an elastic polymer such as polyurethane, coagulating the elastic polymer and converting the microfine fiber-forming fibers to microfine fibers, or a step of converting the microfine fiber-forming fibers to microfine fibers, impregnating a solution or emulsion of an elastic polymer such as polyurethane and coagulating the elastic polymer.

Artificial leathers with a high quality which meet both the sensuous qualities such as appearance and hand and the physical properties such as dimension stability have been required. To meet the requirement, a method of converting microfine fiber-forming fibers to microfine fibers by removing one of their components has been generally employed, as mentioned above.

As compared with the above method using short fibers, a method of using long fibers does not need a series of large apparatuses such as a raw fiber feeder, an apparatus for opening fibers, a carding machine and a cross lay machine. In addition, a nonwoven fabric made of long fibers has a strength higher than that of a nonwoven fabric made of short fibers.

In the production of a nonwoven fabric comprising two kinds of microfine long fibers, two kinds of microfine fibers are mainly formed by dividing or splitting microfine fiber-forming long fibers made of two or more kinds of incompatible polymers at the interface between the polymers along the lengthwise direction. However, because of limitation of uniform division and splitting, it is difficult by this method to obtain a substrate capable of producing a grain-finished artificial leather which is required to be soft. To produce a nonwoven fabric comprising only one kind of microfine long fibers, it is necessary to remove one kind of polymer from microfine fiber-forming long fibers made of two kinds of incompatible polymers. Examples of the chemicals for removal include sodium hydroxide for removing polyester, formic acid for removing polyamide, and trichloroethylene or toluene for removing polystyrene and polyethylene.

Polyvinyl alcohol (PVA) is known as a water-soluble polymer. The degree of its water solubility can be changed by selecting the basic backbone, molecular structure and modified, and its thermoplasticity, i.e., melt-spinnability can be also improved. It is also known that PVA is biodegradable. Recently, it is imperative for the protection of the global environment to how harmonize synthetic chemicals with the nature. In this connection, environmentally friend PVA as the extractable component of microfine fiber-forming fibers and PVA-based fibers including PVA as at least one component thereof attract great attention.

Various artificial leathers having a natural leather-like softness have been proposed (for example, Patent Document 1). For example, one of the proposed artificial leathers is produced by impregnating a polyurethane resin into a nonwoven fabric made of microfine fibers of 1 de or less, wet-coagulating the polyurethane resin to obtain a substrate, and laminating the substrate with a film prepared by coating a polyurethane resin on a release paper. In another proposal, an artificial leather is produced by applying a polyurethane solution on the same substrate, wet-coagulating the polyurethane, and then gravure-roll coating a polyurethane/colorant composition. In still another proposal, an artificial leather is produced by impregnating a polyurethane resin into an entangled nonwoven fabric made of sea-island fibers, wet-coagulating the polyurethane resin, removing one component from the sea-island fibers by dissolution in a solvent, etc. to form a substrate made of bundles of microfine fibers of 0.2 de or less, and then, subjecting the substrate to the surface finishing treatment mentioned above. Although the proposed artificial leathers have a softness resembling natural leathers, a grain-finished artificial leather which has a hand combining softness without resistance and stiffness resembling that of natural sheep leathers together with dense bent wrinkles has not yet been obtained.

To obtain an artificial leather having a soft and dense (stiff) hand, there has been proposed an artificial leather which is produced by impregnating a densified nonwoven fabric with a small amount of a resin (for example, Patent Document 2). However, the proposed artificial leather lacks a surface soft feeling and is insufficient in the interlaminar strength, and therefore, is not suitable as the material for shoes which are used under severe conditions.

To produce a grain-finished artificial leather combining a natural leather-like softness and stiffness but being free from bent wrinkles, a long-fiber nonwoven fabric is proposed (Patent Document 3). Patent Document 3 teaches that the strain markedly caused during the entangling treatment of a long-fiber nonwoven fabric can be relieved by intendedly cut the long fibers during the entangling treatment by needle punching, thereby exposing the cut ends of fibers to the surface of the nonwoven fabric in a density of 5 to 100/mm$^2$. It is also described that 5 to 70 fiber bundles are present per 1 cm width on a vertical cross section (cross section taken along the thickness direction) of the nonwoven fabric, i.e., the number of fibers which are oriented by needle punching in the thickness direction is 5 to 70 per 1 cm width of the vertical cross section. It is further described that the total area of fiber bundles on a horizontal cross section of the nonwoven fabric is 5 to 70% of the cross-sectional area. Although cutting the long fibers to an extent minimizing the reduction in properties, many long fibers are actually cut to obtain the proposed nonwoven fabric structure. Therefore, the advantages of using long fibers that the strength of nonwoven fabric is enhanced because of their continuity are significantly reduced, thereby failing to effectively utilize the advantages of long fibers. To cut the fibers on the surface of nonwoven fabric evenly, the entangling treatment should be performed by needle punching under conditions severer than usual, thereby making it difficult to obtain the high-quality artificial leathers aimed in the present invention.

There has been further proposed a leather-like sheet which is produced by superposing two or more kinds of webs or sheets each being made of different kinds of fibers, entangling the superposed body to obtain an entangled body, impregnating an elastic polymer into the entangled body, and coagulating the elastic polymer. For example, Patent Document 4 proposes a leather-like sheet having a gain layer formed by heat-pressing a melt-blown nonwoven fabric to the surface of a substrate, in which the fineness of microfine fibers constituting the surface of the substrate is 0.01 to 0.5 dtex and the fineness of microfine fibers constituting the back surface of the substrate is 1/2 or less of that of microfine fibers constituting the surface of the substrate. However, the proposed leather-like sheet is poor in the soft feeling of the surface and a grain-finished artificial leather having dense bent wrinkles is difficult to produce therefrom.

[Patent Document 1] JP 63-5518B (pages 2 to 4)
[Patent Document 2] JP 4-185777A (pages 2 to 3)
[Patent Document 3] JP 2000-273769A (pages 3 to 5)
[Patent Document 4] JP 2003-13369A (pages 2 to 6)

DISCLOSURE OF THE INVENTION

An object of the present invention is to provide a substrate for artificial leathers which can be produced from various combinations of microfine fibers and an elastic polymer and combines a softness without resistance and a stiff hand resembling those of natural sheep leathers and has dense bent wrinkles.
Another object is to provide a method of producing such a substrate for artificial leathers.

As a result of extensive research to achieve the above objects, the inventors have reached the present invention. Namely, the present invention relates to a substrate for artificial leathers which comprises a united laminate of a nonwoven fabric layer A comprising bundles of microfine fibers having an average single fiber fineness of 0.5 dtex or less and a cushion layer B comprising an elastic polymer sheet, in which a part of the microfine fibers constituting the nonwoven fabric layer A penetrates through the cushion layer B to form a microfine fiber layer C on an outer surface of the cushion layer B, the elastic polymer sheet has an undulated inner surface with a height difference of 100 μm or more in a thickness direction, and voids having a height of 100 μm or more in a thickness direction are formed between the undulated surface of the elastic polymer sheet and the nonwoven fabric layer A.

The present invention further relates to a method of producing the above substrate for artificial leathers, which comprises the following steps 1 to 5 in an order of step 1, step 2, step 3, step 4 and step 5 or in an order of step 1, step 2, step 3, step 5 and step 4:

step 1 of making microfine fiber-forming fibers which are capable of forming microfine fibers having an average single fiber fineness of 0.5 dtex or less into a fiber web;
step 2 of forming a composite nonwoven fabric by superposing the fiber web obtained in step 1 and an elastic polymer sheet and needle-punching the superposed body so as to allow a part of the microfine fiber-forming fibers constituting the fiber web to penetrate through the elastic polymer sheet to form a layer of the penetrated microfine fiber-forming fibers on an outer surface of the elastic polymer sheet, wherein the needle punching is performed at least partly by needle-punching the fiber web from its outer surface side while holding the microfine fiber-forming fibers penetrating through the elastic polymer sheet and outwardly projecting from the outer surface of the elastic polymer sheet in a brush belt which is disposed so as to come into contact with the outer surface of the elastic polymer sheet;
step 3 of heat-shrinking the composite nonwoven fabric obtained in step 2 to make an inner surface of the elastic polymer sheet into an undulated form;

step 4 of impregnating the heat-shrunk, composite nonwoven fabric obtained in step 3 with a solution or dispersion of an elastic polymer in a non-solvent for the elastic polymer sheet and coagulating the elastic polymer; and

step 5 of converting the microfine fiber-forming fibers to bundles of microfine fibers.

## BRIEF DESCRIPTION OF DRAWINGS

Fig. 1 is an electron micrograph (x 100) showing a vertical cross section taken along TD of the grain-finished artificial leather obtained in Example 1.

Fig. 2 is a schematic side view showing an example of a velour needle punching machine usable in the present invention.

## BEST MODE FOR CARRYING OUT THE INVENTION

The microfine fibers constituting the nonwoven fabric layer A and the microfine fiber layer C are formed from multi-component fibers (composite fibers) made of two or more kinds of spinnable polymers which are chemically or physically different from each other by removing at least one kind of polymer by extraction to convert the fibers to microfine fibers at a suitable stage before or after impregnating the elastic polymer. The multi-component fibers convertible to microfine fibers are referred to herein as microfine fiber-forming fibers.

Typical examples thereof include sea-island fibers, multi-layer fibers and radial-layer fibers which are produced by a chip blend method (mix spinning) or a composite spinning method, with sea-island microfine fiber-forming fibers being preferred because of little fiber damage during needle punching and uniformity of fineness of resulting microfine fibers.

Examples of the island component polymer for the sea-island fibers include, but not limited to, polyester resins such as polyethylene terephthalate (PET), polytrimethylene terephthalate (PTT), polybutylene terephthalate (PBT) and polyester elastomers; polyamide resins such as nylon 6, nylon 66, nylon 610, nylon 12, aromatic polyamides and polyamide elastomers; polyurethane resins; and polyolefin resins, with the polyester resins such as PET, PTT and PBT being particularly preferred because of their easiness of shrinking and good hand and practical performance of resultant grain-finished artificial leathers. The melting point of the island component polymer is preferably 160 °C or higher in view of dimension stability and practical performance. More preferred are fiber-forming crystallizable resins having a melting point of 180 to 250 °C. The melting point was measured by a method described below. The resin for constituting the microfine fibers may be added with a colorant such as dye and pigment, an ultraviolet absorber, a heat stabilizer, a deodorant, a fungicide, and stabilizers.

The sea component polymer for the sea-island fibers is not specifically limited and preferably a polymer which is different from the island component polymer in the solubility to a solvent or the decomposability by a decomposer, which is less compatible with the island component polymer, and which has a melt viscosity or surface tension smaller than those of the island component polymer under the spinning conditions. For example, at least one polymer selected from polyethylene, polypropylene, polystyrene, ethylene-propylene copolymers, ethylene-vinyl acetate copolymers, styrene-ethylene copolymers, styrene-acryl copolymers and polyvinyl alcohol resins is used as the sea component polymer. In view of the production of the substrate for artificial leathers without using chemicals, a water-soluble, thermoplastic polyvinyl alcohol-based resin (PVA-based resin) is preferably used as the sea component polymer, which is selected while taking the spinnability of composite fibers, the needle punchability, the prevention of environmental pollution, and the easiness of removal into consideration collectively.

With the bulkiness of PVA-based composite fibers, the nonwoven fabric made of composite fibers containing PVA-based resin as the sea component and the heat-shrinkable resin mentioned above as the island component hardly grows rigid and coarse due to the damages of fibers caused during the needle punching. When containing a small amount of water, PVA-based resin is plasticized in some extent. When letting the composite fibers shrink by a heat treatment in the plasticized state, the nonwoven fabric is easily and stably densified. By impregnating an aqueous emulsion of an elastic polymer into a nonwoven fabric showing such a behavior at low temperatures where PVA-based resin does not dissolve in water, and thereafter, dissolving and removing PVA-based resin at temperatures where PVA-based resin dissolves in water, voids are formed between the microfine fibers and the elastic polymer. Thus, the substrate for artificial leathers can be made densified and flexible at the same time. The artificial leathers made of the substrate for artificial leathers produced in such manner acquire a drapeability and a hand closely resembling those of natural leathers.

The content of the sea component polymer in the microfine fiber-forming fibers is preferably 5 to 70% by mass, more preferably 10 to 60% by mass, and still more preferably 15 to 50% by mass. If being 5% by mass or more, the composite fibers are stably spun. In addition, since the component to be removed is contained in a sufficient amount, a sufficient number of voids are formed between the microfine fibers and the elastic polymer, to provide artificial leathers with good flexibility. If being 70% by mass or less, since the amount of the component to be removed is suitable for stabilizing the shape of artificial leathers, a large amount of the elastic polymer is not required. In particular, when the entangled nonwoven fabric is made of PVA-based composite fibers, the amount of water to be used to plasticize PVA-based resin for shrinking is reduced, thereby reducing the amount of heat for drying to enhance the productivity. In addition, disadvantages such as an insufficient shrink attributable to an excessively small amount of the shrinking component and a place-to-place uneven shrink are avoided, to enhance the stable production.

The following PVA is preferably used as the PVA-based resin. The viscosity average polymerization degree (hereinafter merely referred to as "polymerization degree") of PVA is preferably 200 to 500, more preferably 230 to 470, and still more preferably 250 to 450. If being 200 or more, the melt viscosity is moderate, and PVA is easily made into a composite with the island component polymer. If being 500 or less, the melt viscosity is not excessively high and the extrusion from a spinning nozzle is easy. By using PVA having a polymerization degree of 500 or less, i.e., a low-polymerization degree PVA, the dissolution to a hot water becomes quick.

The polymerization degree (P) of PVA is measured according to JIS-K6726, in which PVA is re-saponified and purified, and then, an intrinsic viscosity [η] is measured in water of 30 °C. The polymerization degree (P) is calculated from the following equation:

$$P = ([\eta]\ 10^3/8.29)^{(1/0.62)}.$$

The saponification degree of PVA is preferably 90 to 99.99 mol %, more preferably 93 to 99.98 mol %, still more preferably 94 to 99.97 mol %, and particularly preferably 96 to 99.96 mol %. If being 90 mol % or more, the melt spinning is performed without causing thermal decomposition and gelation because of a good heat stability and the biodegradability is good. Also, the water solubility is not reduced when modified with a copolymerizable monomer which will be described below, and the conversion to microfine fibers becomes easy.
PVA having a saponification degree exceeding 99.99 mol % is difficult to produce stably.

PVA used in the present invention is biodegradable and decomposed to water and carbon dioxide by an activated sludge treatment or by being laid underground. It is preferred to treat a PVA-containing waste water, which is resulted from the removal of PVA by dissolution, by activated sludge. PVA is completely decomposed within a period of from two days to one month when the PVA-containing waste water is continuously treated by activated sludge. Since the combustion heat is low to impose little load of heat to an incinerator, PVA may be incinerated after removing water from the PVA-containing waste water.

The melting point of PVA (Tm) is preferably 160 to 230 °C, more preferably 170 to 227 °C, still more preferably 175 to 224 °C, and particularly preferably 180 to 220 °C. If being 160 °C or higher, the fiber tenacity is prevented from being reduced due to the lowering of crystallizability and the fiber formation is prevented from becoming difficult because of the deteriorated heat stability. If being 230 °C or lower, PVAfibers can be stably produced because the melt spinning can be performed at temperatures lower than the decomposition temperature of PVA. The measuring method of the melting point will be described below.

PVA is produced by saponifying a resin mainly constituted by vinyl ester units. Examples of vinyl monomers for the vinyl ester units include vinyl formate, vinyl acetate, vinyl propionate, vinyl valerate, vinyl caprate, vinyl laurate, vinyl stearate, vinyl benzoate, vinyl pivalate and vinyl versatate, with vinyl acetate being preferred in view of easy production of PVA.

PVA may be homo PVA or modified PVA introduced with co-monomer units, with the modified PVA being preferred in view of a good melt spinnability, water solubility and fiber properties. In view of a good copolymerizability, melt spinnability and water solubility of fibers, preferred examples of the comonomers are α-olefins having 4 or less carbon atoms such as ethylene, propylene, 1-butene and isobutene; and vinyl ethers such as methyl vinyl ether, ethyl vinyl ether, n-propyl vinyl ether, isopropyl vinyl ether and n-butyl vinyl ether. The content of the comonomer units derived from α-olefins and/or vinyl ethers is preferably 1 to 20 mol %, more preferably 4 to 15 mol %, and still more preferably 6 to 13 mol % based on the constitutional units of the modified PVA. Particularly preferred is ethylene-modified PVA, because the fiber properties are enhanced when the comonomer unit is ethylene. The content of the ethylene units is preferably 4 to 15 mol % and more preferably 6 to 13 mol %.

PVA can be produced by a known method such as bulk polymerization, solution polymerization, suspension polymerization, and emulsion polymerization. Preferred are a bulk polymerization and a solution polymerization which are carried out in the absence of solvent or in the presence of a solvent such as alcohol. Examples of the solvent for the solution polymerization include lower alcohols such as methyl alcohol, ethyl alcohol and propyl alcohol. The copolymerization is performed in the presence of a known initiator, for example, an azo initiator or peroxide initiator such as a,a'-azobisisobutyronitrile, 2,2'-azobis(2,4-dimethyl-varelonitrile), benzoyl peroxide, and n-propyl peroxycarbonate. The polymerization temperature is not critical and a range of from 0 to 150 °C is recommended.

The substrate for artificial leathers of the invention is produced by a method including the following production steps 1 to 5 in the order of (1) → (2) → (3) → (4) → (5) or in the order of (1) → (2) → (3) → (5) → (4):

Step 1 of making microfine fiber-forming fibers which are convertible to microfine fibers having an average single fiber fineness of 0.5 dtex or less into a fiber web;

Step 2 of forming a composite nonwoven fabric by superposing the fiber web obtained in step 1 and an elastic polymer sheet and needle-punching the superposed body while allowing a part of the microfine fiber-forming fibers constituting the fiber web to penetrate through the elastic polymer sheet to form a layer of the penetrated microfine fiber-forming fibers on the outer surface of the elastic polymer sheet, wherein the needle punching is performed at least partly by needle-punching the fiber web from its outer surface side while holding the microfine fiber-forming fibers penetrating through the elastic polymer sheet and outwardly projecting from the outer surface of the elastic polymer sheet in a brush belt which is disposed so as to come into contact with the outer surface of the elastic polymer sheet;

Step 3 of heat-shrinking the composite nonwoven fabric obtained in step 2 to undulate the inner surface of the elastic polymer sheet;

Step 4 of impregnating the heat-shrunk, composite nonwoven fabric obtained in step 3 with a solution or dispersion of an elastic polymer in a non-solvent to the elastic polymer sheet and coagulating the elastic polymer; and

Step 5 of converting the microfine fiber-forming fibers to bundles of microfine fibers.

Production Step 1

In the production step 1, the microfine fiber-forming fibers are made into a fiber web.
Like the method most commonly employed in the production of the known substrate for artificial leathers, drawn microfine fiber-forming fibers having a desired fineness may be cut to staples having a desired length after crimping and then the staples may be made into a fiber web by a carding machine, crosslapper or random webber. Alternatively, the microfine fiber-forming fibers are made into a fiber web by a spun bond method simultaneously with the spinning thereof. For example, the fiber web may be formed by cooling the microfine fiber-forming fibers extruded from a spinning nozzle by a cooling apparatus, drawing the microfine fiber-forming fibers to an intended fineness by air jet at a speed corresponding to a take-up speed of 1000 to 6000 m/min using a sucking apparatus such as an air jet nozzle, and then collecting the fibers on a moving surface while opening the fibers. The obtained fiber web may be press-bonded by pressing, if needed, to stabilize the shape. This method of producing the fiber web is advantageous in productivity, because it does not need a series of large apparatuses such as a raw fiber feeder, an apparatus for opening fibers and a carding machine which are necessarily used in the known production of a fiber web using short fibers. In addition, since a long-fiber web and a substrate for artificial leathers made thereof are constituted by long fibers with high continuity, the properties thereof such as strength are high as compared with those of a short-fiber web and substrate for artificial leathers made thereof which have been hitherto generally used. In the present invention, the term "long fiber" means a fiber longer than a short fiber generally having a length of about 10 to 50 mm and a fiber not intentionally cut as so done in the production of short fibers. For example, the length of the long fibers before converted to microfine fibers is preferably 100 mm or longer, and may be several meters, hundreds of meter, or several kilo-meters as long as being technically possible to produce or being not physically broken.

In the production of a short fiber web, the fineness, fiber length and degree of crimp of microfine fiber-forming fibers are restricted by the production apparatus such as an apparatus for opening fibers and a carding machine. Particularly, a fineness of 2 dtex or more is required, and a fineness of 3 to 6 dtex is generally employed in view of the production stability. In contrast, in the production of a long fiber web, the fineness of microfine fiber-forming fibers is not particularly restricted by the production apparatus. Therefore, the fineness can be selected from a wide range of about 0.5 dtex or more while taking the spinning stability of the microfine fiber-forming fibers into consideration, and the fineness of broader range of 1 to 10 dtex can be employed even when the handling properties in subsequent steps is taken into consideration. In view of the properties and hand of the resultant substrate for artificial leathers, the fineness of the microfine fiber-forming fibers is preferably 1 to 5 dtex. In view of easiness of handling in the production steps and product stability, the mass per unit area of the fiber web is preferably 80 to 2000 g/m$^2$, and more preferably 100 to 1500 g/m$^2$. It is preferred to regulate the fineness, the cross-sectional shape and the content of extractable component such that the average single fiber fineness of the resultant microfine fibers falls within a range of 0.0003 to 0.5 dtex. If being 0.0003 dtex or more, the microfine fibers have a moderate stiffness. Therefore, the nonwoven fabric is prevented from being densified by collapse, this in turn preventing the substrate for artificial leathers from being made heavy and hard. If being 0.5 dtex or less, a substrate for artificial leathers having a softness without resistance and a grain-finished artificial leather having a good surface smoothness and dense bent wrinkles are obtained. The average single fiber fineness of the microfine fibers is more preferably 0.005 to 0.35 dtex and still more preferably 0.01 to 0.2 dtex.

Production Step 2

In the production step 2, the fiber web for the nonwoven fabric layer A which is produced in the production step 1 and an elastic polymer sheet for the cushion layer B are united.

The elastic polymer for the elastic polymer sheet is selected from those conventionally used in the production of artificial leathers, for example, from polyurethane resin, polyvinyl chloride resin, polyvinyl butyral resin, polyacrylic resin, polyamino acid resin, silicone resin and mixtures thereof. These resins may be copolymers. Most preferred is an elastic polymer mainly composed of a polyurethane resin because a substrate for artificial leathers well balanced between hand and physical properties is obtained. The elastic polymer sheet is preferably in a highly continuous structure in planar direction and may be in a film form or a nonwoven fabric form. To allow the microfine fiber-forming fibers constituting the fiber web to penetrate through the elastic polymer sheet after superposing the fiber web and the elastic polymer sheet, the elastic polymer sheet is preferably a nonwoven fabric. The nonwoven fabric of elastic polymer is produced by the melt-blown method to be mentioned below.

The polyurethane preferably used in the present invention is produced, for example, by the reaction of a polymer diol, preferably a polyester diol having an average molecular weight of 600 to 3000, which is produced by the reaction of at least one diol and at least one dicarboxylic acid or its ester, with an organic diisocyanate in the presence of a chain extender. Examples of the diol include straight-chain or branched aliphatic diols having 2 to 12 carbon atoms such as ethylene glycol, propanediol, 1,4-butanediol, 1,5-pentanediol, 3-methyl-1,5-pentanediol, neopentyl glycol and 1,6-hexanediol; and alicyclic diols having 6 to 8 carbon atoms such as 1,4-cyclohexanediol and 1,4-cyclohexanedimethanol. Examples of the dicarboxylic acid include aliphatic dicarboxylic acids such as succinic acid, glutaric acid and adipic acid. Example of the organic diisocyanates include aromatic diisocyanates such as phenylene diisocyanate, tolylene diisocyanate and 4,4'-diphenylmethane diisocyanate and aliphatic or alicyclic diisocyanates such as hexametnylene diisocyanate, lysine diisocyanate, cyclohexane diisocyanate, isophorone diisocyanate, dicyclohexylmethane diisocyanate, and hydrogenated tetramethylxylylene diisocyanate. Examples of the chain extender include low molecular compounds having two active hydrogen atoms such as diol, aminoalcohol, hydrazine and diamine. A thermoplastic polyurethane is produced by a polymerization such as melt polymerization, bulk polymerization and solution polymerization of a mixture of the polymer diol, organic diisocyanate and chain extender in a desired proportion. In addition to the polyester polyurethane, a polyether polyurethane, a polycarbonate polyurethane, copolymers thereof and mixtures thereof are usable according to the aimed product.

To obtain a nonwoven fabric of elastic polymer excellent in the uniformity, a thermoplastic polyurethane which contains a polymer diol for constituting the soft segment in an amount of 45 to 75% by mass is preferably used. Also, it is preferred to regulate the polymerization degree such that the resultant polyurethane has an intrinsic viscosity [η] of 0.5 to 1.5 dl/g by conducting the polymerization in the presence of the chain extender mainly composed of a compound selected from a low molecular aliphatic diol and isophoronediamine.

If the content of the soft segment is 45% by mass or more, the molten polyurethane has a good spinnability and is easily formed into fine fibers, and the resultant nonwoven fabric has a good flexibility, elasticity, shape stability and surface smoothness. If being 75% by mass or less, the spinnability and formation into fine fibers, in addition to the flexibility, are good. If the intrinsic viscosity [η] is 0.5 dl/g or more, the spinnability and the formation into fine fibers are good. If being 1.5 dl/g or less, the melt viscosity is moderate and the fiber flow is good. The polyurethane may be added with an additive such as antiblocking agent, stabilizer, colorant and antistatic agent in a suitable amount. The polyurethane described above is made into a nonwoven fabric sheet by a melt-blown method. The melt viscosity of the molten polyurethane is preferably 500 P or less, and the spinning temperature is selected from 220 to 280 °C so as to maintain the melt viscosity within the above range. The amount of blowing air is set so as to obtain a nonwoven fabric of elastic polymer having a desired mass per unit area.

The softening temperature of polyurethane for the elastic polymer sheet is preferably 100 to 220 °C. The softening temperature is largely dependent particularly upon the molecular weight of polyurethane and the kinds and proportions of the organic diisocyanate (hard segment) and chain extender. Therefore it is preferred to select the softening temperature while taking the easiness of forming the elastic polymer sheet, aimed properties and the adhesiveness with the microfine fibers into consideration. The softening temperature is defined as the temperature at the end point of a flat region showing a rubbery state in the temperature dependency curve of the storage elastic modulus, which is obtained by a tensile dynamic viscoelastic measurement (frequency: 11 Hz).

The mass per unit area of the elastic polymer sheet is preferably 10 to 150 g/m$^2$. If being 10 g/m$^2$ or more, the bent wrinkles can be effectively densified while enhancing the fullness of the surface. If being 150 g/m$^2$ or less, an excessively large weight of the substrate for artificial leathers and the reduction of product value due to a rubbery hand can be avoided.

To unite the fiber web and the elastic polymer sheet easily by entanglement, the fiber web may be needle-punched in advance in a punching density of 20 to 100 punch/cm$^2$. The punching density referred to herein is a total number of felt needles punched to the web per unit area. For example, when the web is punched 50 times by a needle board having felt needles in a density of 10/cm$^2$, the punching density is 500 punch/cm$^2$.

The method for uniting the fiber web and the elastic polymer sheet is not particularly limited. When the mass per unit area of the fiber web is large, a needle punching method is preferably used to effectively entangle the microfine fiber-forming fibers constituting the fiber web, and simultaneously, unite two layers. The punching density is preferably 300 to 4000 punch/cm$^2$ and more preferably 500 to 3500 punch/cm$^2$. If being 300 punch/cm$^2$ or more, the fiber web and the elastic polymer sheet is sufficiently united. If being 4000 punch/cm$^2$ or less, the fibers constituting the fiber web and the elastic polymer sheet are little damaged by needles and the properties are prevented from being reduced. In the present invention, the fibers in the fiber web should be allowed to penetrate through the elastic polymer sheet in its thickness direction. Therefore, when needle-punching from the side of fiber web, the punching depth should be selected such that at least a barb of needles penetrates through the elastic polymer sheet. When needle-punching from the side of elastic polymer sheet, the punching depth should be selected such that fibers penetrating through the elastic polymer sheet are not damaged.

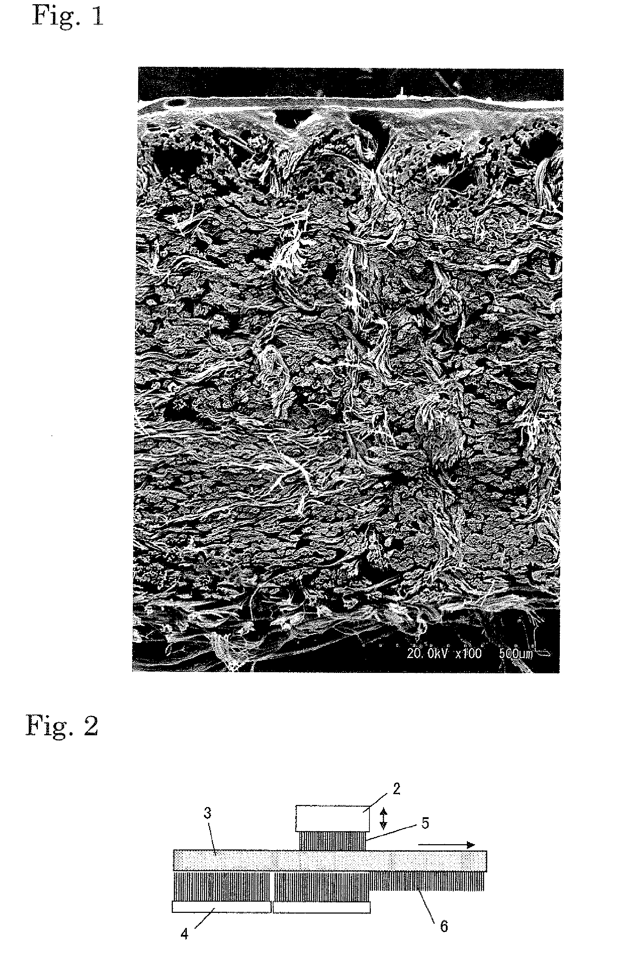

At least a part of the needle punching for uniting the fiber web and the elastic polymer sheet is preferably performed by the following method, which is explained below with reference to Fig. 2. A brush belt 4 is disposed so as to allow it to come into contact with the outer surface of the elastic polymer sheet in a superposed sheet 3 (fiber web/ elastic polymer sheet). Using a needle punching machine 2 on which needles 5 having one or more barbs are arranged, the superposed sheet 3 is punched from the outer surface of the fiber web in a depth so that at least one barb is allowed to pass through the elastic polymer sheet. The microfine fiber-forming fibers which pass through the elastic polymer sheet and outwardly project from the outer surface of the elastic polymer sheet are held in the brush of the brush belt. By the above needle punching, the microfine fiber-forming fibers are entangled with each other or the microfine fiber-forming fibers and the elastic polymer sheet are entangled to easily laminate and unite the fiber web and the elastic polymer sheet, while substantially preventing the microfine fiber-forming fibers outwardly projecting from the outer surface of the elastic polymer sheet from being cut and while orienting the microfine fiber-forming fibers in the fiber web toward the thickness direction. The projecting microfine fiber-forming fibers form a raised layer 6.

The brush belt is composed of an endless belt having thereon a brush having a length longer than the projecting length of the microfine fiber-forming fibers which outwardly project in loop form from the elastic polymer sheet. At least in the needle punching zone, the brush belt is disposed so as to move together with the superposed sheet in the same direction with the tips of brushes kept into contact with the outer surface of the elastic polymer sheet. With such a brush belt, the microfine fiber-forming fibers outwardly projected from the elastic polymer sheet by the needle punching are held in the brush stably and uniformly. Therefore, a loop raised layer is formed on the outer surface of the elastic polymer sheet immediately after the needle punching, and the microfine fiber-forming fibers in the fiber web are efficiently oriented in the thickness direction. In the present invention, the needle punching mentioned above is referred to as a velour needle punching.

In the present invention, the needle punching is partly performed by the velour needle punching to effectively unite the fiber web and the elastic polymer sheet by allowing the microfine fiber-forming fibers in the fiber web to effectively penetrate through the elastic polymer sheet and further to orient the microfine fiber-forming fibers in the fiber web effectively in the thickness direction, and the formation of a raised layer of projecting loop fibers on the outer surface of the elastic polymer sheet is not an important result of the needle punching. Therefore, a usual needle punching using a metal plate having perforated holes for allowing the needles to pass through (bed plate) in place of the brush belt may be conducted before or after the velour needle punching. The velour needle punching may be performed from the outer surface of the elastic polymer sheet. The loop raised surface after the velour needle punching may be further punched by a usual needle punching or the velour needle punching so as to return the raised fibers to the fiber web. With such a further treatment, the microfine fiber-forming fibers are entangled more densely. If the velour needle punching is performed from both sides, the raised fibers returned to the fiber web are oriented in the thickness direction. Therefore, the degree of orientation of the microfine fiber-forming fibers in the thickness direction is effectively increased.

The needle suitable for the velour needle punching is selected from known felt needles with usual shape as long as the needle is not broken and the fibers are not damaged. The number of barbs is preferably 1 to 9. A crown needle having three barbs at three vertexes of triangle blade cross section at the same distance from the tip of needle is preferably used because more fibers are oriented in the thickness direction by a small punching density. To hold the microfine fiber-forming fibers which outwardly project from the outer surface of the elastic polymer sheet in the brush which is disposed so as to come into contact with the outer surface of the elastic polymer sheet, at least the first barb from the tip of the needle is required to pass through the fiber web and the elastic polymer sheet and come into the inside of the brush. To hold the projecting fibers stably, the punching depth is selected so as to allow the first barb to reach the depth of 3 mm or more, preferably 5 mm or more from the tip of the brush.

The punching density (punch/cm$^2$) of the velour needle punching is not particularly limited and selected according to the intended properties, apparent density, degree of orientation in the thickness direction, fineness of the microfine fiber-forming fibers, mass per unit area of the fiber web and shape of needles to be used. Preferably, the punching density is 100 to 1000 punch/cm$^2$. Within the above range, the fibers are effectively oriented and remarkable needle marks (geometric patterns formed by many fine holes caused by punched needles) are prevented. It is also preferred to select the needle shape which hardly causes the needle mark.

In case of using a usual needle punching which uses a bed plate in place of the brush belt in combination with the velour needle punching, the punching conditions such as the shape of needle, the punching depth, the punching density, and the selection of the surface to be punched are not particularly limited and selected from the conditions generally employed in the known methods according to the desired properties. Before or after the velour needle punching, a water jet treatment may be conducted, if necessary, as a part of the entangling treatment.

The apparent density of the laminated nonwoven fabric obtained by the entanglement is preferably 0.10 g/cm$^3$ or more. To obtain a flexibility resembling natural sheep leathers intended in the present invention, the apparent density of the laminated nonwoven fabric is generally preferred as low as possible. However, if the apparent density is 0.10 g/cm$^3$ or more, a uniform structure of the nonwoven fabric is obtained to make the quality in the planar direction uniform. Also, a substrate for artificial leathers capable of forming artificial leathers having desired properties and hand is obtained by the subsequent conversion to microfine fibers and impregnation of an elastic polymer. To obtain a dense fiber entangled structure which is not attained only by the entangling treatment, it is preferred to heat-treat the laminated nonwoven fabric to shrink the fibers, thereby causing the surface shrinking of the nonwoven fabric structure. If the apparent density is 0.10 g/cm$^3$ or more, a uniform and dense nonwoven fabric is obtained easily. The apparent density of the laminated nonwoven fabric is preferably 0.13 to 0.20 g/cm$^3$. The apparent density is determined by first calculating the mass per unit area from the measured mass of the laminated nonwoven fabric having a given surface area, separately measuring the thickness of the laminated nonwoven fabric under a load of 0.7 gf/cm$^2$, and then dividing the mass per unit area by the thickness.

Production Step 3

In the production step 3, the laminated nonwoven fabric obtained in the production step 2 is heat-shrunk by a hot water or steam. Because of the difference in the shrinkages of the fiber web and the elastic polymer sheet, the elastic polymer sheet having a smaller shrinkage is randomly undulated along both MD and TD in the laminated nonwoven fabric. With such an undulated structure, a substrate for artificial leathers capable of producing grain-finished artificial leathers combining a softness without resistance and a stiff hand and having dense bent wrinkles with surface fullness, which are hitherto not obtained by simply impregnating an elastic polymer to the fiber web or coating the surface of the fiber web with an elastic polymer, can be obtained. It is preferred that the fiber web and the elastic polymer sheet have shrinkages which give a ratio of area retentions, S(A)/S(B), of 0.3 to 0.8. S(A) is an area retention (area after shrinking/ area before shrinking) of the fiber web alone when heat-treated for 5 min, for example, in an atmosphere at 70 °C and 95% relative humidity after adding water in an amount of 20% by mass of the fiber web. S(B) is an area retention of the elastic polymer sheet alone when heat-treated under the same condition. It is important to shrink the fiber web and the elastic polymer sheet under the same condition. The heat-treating condition mentioned above is an example thereof. The shrinking may be performed under the condition different from the above condition as long as the fiber web and the elastic polymer sheet are heat-treated under the same condition. If S(A)/S(B) is 0.3 or more, the elastic polymer sheet is made into a form with sufficient undulation and the fiber web has a density suitable for obtaining a soft hand. If S(A) /S(B) is 0.8 or less, the elastic polymer sheet is made into a form with sufficient undulation and a substrate for artificial leathers having a surface with fullness and roundness is obtained. To enhance the effect of the undulated structure, the height difference of the undulation on the inner surface of the elastic polymer sheet is 100 μm or more, preferably 100 to 500 μm and still more preferably 300 μm or less in the thickness direction when observed on a vertical cross section taken along TD. The number of upward convexes of the undulated structure is preferably 1.0 to 7 per 1 mm length taken in parallel to the surface of the laminated nonwoven fabric. It is also preferred that voids are formed between the fiber web and the elastic polymer sheet as a result of forming the undulated structure of the elastic polymer sheet. The height of voids in the thickness direction is 100 μm or more, preferably 100 to 500 μm and still more preferably 300 μm or less. The number of voids is preferably 1.0 to 5 per 1 mm length taken in parallel to the surface of the laminated nonwoven fabric. The undulated structure of the elastic polymer sheet is formed most preferably by the heat shrinking treatment because the production stability is high. Alternatively, the undulated structure may be formed by the shrinking during the needle punching or the shrinking in the width direction due to tension in the production steps.

When the sea component of the microfine fiber-forming fibers is PVA, the heat shrinking treatment is performed in an atmosphere at a relative humidity of preferably 75% or more and more preferably 90% or more after adding water in an amount of preferably 5% by mass or more and more preferably 10% by mass or more based on the amount of PVA in the composite nonwoven fabric. The temperature of the heat-shrinking atmosphere is preferably 60 °C or more and more preferably 60 to 100 °C. Within the above ranges, the heat shrinking is well controlled and the fiber web shrinks largely to facilitate the formation of the sufficiently undulated structure of the elastic polymer sheet. If the amount of water to be added is 5% by mass or more, the water-soluble resin component (PVA) of the microfine fiber-forming fibers is sufficiently plasticized and a sufficient shrinking is obtained. If the relative humidity is 75% or more, the water-soluble resin component is sufficiently plasticized because the added water is not rapidly evaporated, thereby obtaining a sufficient shrinking. The upper limit of the amount of water to be added is not critical, and preferably 50% by mass or less of PVA component in view of preventing the contamination due to eluted PVA and enhancing the drying efficiency. Water is added by a method of sprinkling water onto the laminated nonwoven fabric, a method of providing steam or mist of water droplets to the laminated nonwoven fabric, or a method of applying water onto the surface of the laminated nonwoven fabric, with the method of providing steam or mist of water droplets to the laminated nonwoven fabric being particularly preferred. It is preferred to add water at a temperature substantially not dissolving PVA. The heat shrinking treatment may be conducted at a relative humidity of 75% or more after adding water to the composite nonwoven fabric or may be conducted simultaneously with the addition of water. During the heat shrinking treatment, the composite nonwoven fabric is kept in the above atmosphere without tension as much as possible. The heat shrinking time is preferably 1 to 5 min in view of the productivity and a sufficient shrinking. The composite nonwoven fabric may be pressed when the remaining PVA is still in the plasticized or melted state, to smoothen the surface or adjust the apparent density.

Production Step 4

In the production step 4, an elastic polymer is impregnated into the heat-shrunk composite nonwoven fabric obtained in the production step 3 and coagulated. To adjust the apparent density or hand of the substrate for artificial leathers, the heat-shrunk composite nonwoven fabric may be subjected to a press treatment or surface smoothening treatment, if necessary, before impregnating the elastic polymer. The elastic polymer is impregnated in the form of a solution or dispersion in a non-solvent to the elastic polymer sheet. When the elastic polymer sheet is made of the polyurethane mentioned above, an aqueous emulsion of the elastic polymer is preferably used because of a good processability. It is advantageous to conduct the production step 4 after the step of converting the microfine fiber-forming fibers to microfine fibers (production step 5), because the elastic polymer is bonded to some parts of the microfine fibers and the shape of the substrate for artificial leathers is stabilized by a small amount of the elastic polymer. The amount (solid basis) of the elastic polymer to be impregnated is preferably 0.5 to 20% by mass and more preferably 1 to 15% by mass based on the mass of the composite nonwoven fabric after the conversion to microfine fibers. If being 0.5% by mass or more, the microfine fibers are well fixed to obtain dense bent wrinkles, a good shape stability and a good surface smoothness. If being 20% by mass or less, a soft hand and a flexibility with low resistance resembling natural leathers are obtained, because the influence of the elasticity of the elastic polymer is reduced. In the present invention, even when the elastic polymer is used in a small amount, dense bent wrinkles are obtained by the presence of the cushion layer B united with the nonwoven fabric layer A. In addition, since the impregnated amount of the elastic polymer is small, a substrate for artificial leathers combining a softness without resistance and a stiff hand. Examples of the elastic polymer include synthetic resins such as polyvinyl chloride, polyamide, polyester, polyester-ether copolymer, polyacrylic ester copolymer, polyurethane, neoprene, styrene-butadiene copolymer, silicone resin, polyamino acid and polyamino acid-polyurethane copolymer, natural high molecular resin, and mixtures thereof. If necessary, a pigment, a dye, a crosslinking agent, a filler, a plasticizer, a stabilizer, etc. may be added. Since a soft hand is obtained, polyurethane or a mixture of polyurethane and another resin is preferably used. The resin concentration of an aqueous emulsion is preferably 3 to 40% by mass.
The impregnated elastic polymer is coagulated and dried preferably at 40 to 100 °C.

Production Step 5

In the production step 5, the microfine fiber-forming fibers in the composite nonwoven fabric are converted to microfine fibers before or after the production step 4. The conversion to microfine fibers is performed by removing the sea component such as PVA in the microfine fiber-forming fibers by extraction. The removal by extraction is performed using a dyeing machine such as a jet dyeing machine and a jigger, or a scouring machine such as an open soaper, although not limited thereto. The temperature of water in an extraction bath is preferably 80 to 95 °C. It is preferred to remove the most or all of the sea component by repeating the immersion of the composite nonwoven fabric in the extraction bath and the subsequent squeeze of water.

The apparent density of the substrate for artificial leathers thus produced is preferably 0.35 to 0.65 and more preferably 0.40 to 0.55. Within the above range, a dense feeling and flexibility resembling natural leathers can be realized. In the substrate for artificial leathers, the thickness of the nonwoven fabric layer A is preferably 100 to 3000 $\mu$m, the thickness of the elastic polymer sheet constituting the cushion layer B is preferably 10 to 100 $\mu$m (thickness of cushion layer is 100 to 500 $\mu$m when expressed by the undulation height), and the thickness of the microfine fiber layer C is preferably 20 to 1000 $\mu$m.

The substrate for artificial leathers thus produced is made into a grain-finished artificial leather by applying a resin for a surface coating layer and subjecting to a treatment such as embossing, softening and dyeing by a known method under desired conditions. The artificial leathers thus produced combine a softness without resistance and a stiff hand resembling natural leathers and have bent wrinkles with fullness and drapeability attributable to long fibers, and therefore, are suitable as the materials for the products such as clothes, shoes, gloves, bags, baseball gloves, belts, balls and interior furniture such as sofa.

EXAMPLES

The present invention will be described in more detail with reference to the examples. However, it should be noted that the scope of the present invention is not limited thereto. The "part(s)" and "%" used in the examples are based on the mass unless otherwise noted. Each measuring result was obtained by the following method. The results are expressed by an average of five measured values unless otherwise noted.

(1) Average fineness of fiber

Calculated from the density of the resin used for forming the fibers and the cross-sectional area of the fibers constituting the nonwoven fabric observed under a scanning electron microscope (magnification of few hundreds to few thousands).

(2) Melting point of resin

Using a differential scanning calorimeter (TA3000 manufactured by Mettler Co. Ltd.), a resin was heated to 300 °C at a temperature rising rate of 10 °C/min in nitrogen atmosphere, cooled to room temperature, and then, heated again to 300 °C at a temperature rising rate of 10 °C/min. The peak top temperature of the endothermic peak is taken as the melting point.

(3) Undulation height of elastic polymer sheet

Electron photomicrographs (x 100) of vertical cross sections (5 positions) taken along TD and vertical cross sections (5 positions) taken along MD were taken. On each electron photomicrograph, the height difference between the highest part and the lowest part of undulated elastic polymer sheet was measured along 1 mm length in parallel to the surface of the substrate for artificial leathers. The result is shown by an average of 10 measurements.

(4) Number of undulation of elastic polymer sheet

Electron photomicrographs (x 100) of vertical cross sections (5 positions) taken along TD and vertical cross sections (5 positions) taken along MD were taken. On each electron photomicrograph, the number of upward convexes of undulated elastic polymer sheet was counted along 1 mm length in parallel to the surface of the substrate for artificial leathers. The result is shown by an average of 10 measurements.

(5) Height of void between elastic polymer sheet and nonwoven fabric

Electron photomicrographs ($\times$ 100) of vertical cross sections (5 positions) taken along TD and vertical cross sections (5 positions) taken along MD were taken. On each electron photomicrograph, the height of the largest void within 1 mm length in parallel to the surface of the substrate for artificial leathers was measured. The result is shown by an average of 10 measurements.

(6) Number of voids between elastic polymer sheet and nonwoven fabric

Electron photomicrographs ($\times$ 100) of vertical cross sections (5 positions) taken along TD and vertical cross sections (5 positions) taken along MD were taken. On each electron photomicrograph, the number of voids between the elastic polymer sheet and the nonwoven fabric was counted along 1 mm length in parallel to the surface of the substrate for artificial leathers. The result is shown by an average of 10 measurements.

(7) Thickness and apparent density of artificial leather

Measured according to JIS L 1096:1999 8.5 and JIS L 1096:1999 8.10.1, respectively.

(8) Hand

Evaluated by five panelists according to the following ratings:

A: soft hand without resistance,
B: soft hand with resistance, and
C: hard hand with resistance.

(9) Fullness

A grain-finished artificial leather sample (4 x 4 cm) was folded lengthwise in two with the surface outside and then folded widthwise in two. The folded sample was held at 1 cm from the folded portion. The appearance of the folded portion at the center of the sample was visually observed. The result was evaluated by the following ratings.

A: semi-circular folded portion with no buckling wrinkle
B: semi-circular folded portion with 4 or more buckling wrinkles
C: polygonal folded portion with 2 to 3 buckling wrinkles
D: acute folded portion with 1 buckling wrinkle

PRODUCTION EXAMPLE 1

Production of Polyurethane Nonwoven Fabric

Into a screw kneading polymerizer, poly(3-methyl-1,5-pentyl adipate glycol) having an average molecular weight of 1150, polyethylene glycol having an average molecular weight of 2000, 4,4'-diphenylmethane diisocyanate and 1,4-butanediol were charged in a molar ratio of 0.9:0.1:4:3 (theoretical nitrogen content based on isocyanate group was 4.63%). Then, a melt polymerization was carried out to produce polyurethane. The softening temperature of polyurethane was 125 °C. Molten polyurethane was extruded from the slots at both sides of a die orifice heated at 260 °C by the action of air jet heated at 260 °C into a form of fine fibers and collected on a wire net moving at a speed of 4 m/min at a collecting distance of 40 cm. The collected web was a random web made of the fine fibers. The obtained melt-blown nonwoven fabric of polyurethane had an average mass per unit area of 25 $g/m^2$, an average thickness of 0.05 mm and an apparent density of 0.50 $g/cm^3$.

PRODUCTION EXAMPLE 2

Production of Water-Soluble, Thermoplastic Polyvinyl Alcohol

A 100-L pressure reactor equipped with a stirrer, a nitrogen inlet, an ethylene inlet and an initiator inlet was charged with 29.0 kg of vinyl acetate and 31.0 kg of methanol. After raising the temperature to 60°C, the reaction system was purged with nitrogen by bubbling nitrogen for 30 min. Then, ethylene was introduced so as to adjust the pressure of the reactor to 5.9 $kg/cm^2$. A 2.8 g/L methanol solution of 2,2'-azobis(4-methoxy-2,4-dimethylvaleronitrile) (AMV) was purged with nitrogen by nitrogen gas bubbling. After adjusting the temperature of reactor to 60°C, 170 mL of the initiator solution was added to initiate the polymerization. During the polymerization, the pressure of reactor was maintained at 5.9 $kg/cm^2$ by introducing ethylene, the polymerization temperature was maintained at 60°C, and the initiator solution was continuously added at a rate of 610 mL/h. When the conversion of polymerization reached 70% after 10 h, the polymerization was terminated by cooling. After releasing ethylene from the reactor, ethylene was completely removed by bubbling nitrogen gas. The non-reacted vinyl acetate monomer was removed under reduced pressure to obtain a methanol solution of polyvinyl acetate, which was then diluted to 50% concentration with methanol. To 200 g of the 50% methanol solution of polyvinyl acetate (100 g of polyvinyl acetate in the solution), 46.5 g of a 10% methanol solution of NaOH was added for saponification. The molar ratio of NaOH/vinyl acetate unit was 0.10. After about 2 min of the addition of the alkali solution, the system was gelated. The gel was crushed by a crusher and allowed to stand at 60°C for one hour to allow the saponification to further proceed. Then, 1000 g of methyl acetate was added to neutralize the remaining alkali. After confirming the completion of neutralization by phenolphthalein indicator, white solid (PVA) was separated by filtration. The separated PVA was added with 1000 g of methanol and allowed to stand at room temperature for 3 h for washing. After repeating the above washing operation three times, the liquid was centrifugally removed and PVA remained was dried in a dryer at 70°C for 2 days to obtain a dried PVA.
The saponification degree of the obtained ethylene-modified PVA was 98.4 mol %. The modified PVA was incinerated and dissolved in an acid for analysis by atomic-absorption spectroscopy. The content of sodium was 0.03 part by mass based on 100 parts by mass of the modified PVA. After repeating three times the reprecipitation purification in which n-hexane is added to the methanol solution of polyvinyl acetate obtained by removing the non-reacted vinyl acetate monomer after the polymerization to precipitate polyvinyl acetate and acetone is then added to dissolve the precipitation, the precipitate was vacuum-dried at 80 °C for 3 days to obtain a purified polyvinyl acetate. The purified polyvinyl acetate was dissolved in d6-DMSO and analyzed by 500 MHz H-NMR (JEOL GX-500) at 80 °C. The content of ethylene unit was 10 mol %. The above methanol solution of polyvinyl acetate was saponified in an alkali molar ratio (alkali/vinyl acetate unit) of 0.5. The resultant gel was crushed and the saponification was allowed to further proceed by standing at 60 °C for 5 h. The saponification product was extracted by Soxhlet with methanol for 3 days and the obtained extract was vacuum-dried at 80 °C for 3 days to obtain a purified, ethylene-modified PVA. The average polymerization degree was 330 when measured by a method of JIS K6726. The content of 1,2-glycol linkage and the content of three consecutive hydroxyl groups were respectively 1.50 mol % and 83% when measured by 5000 MHz H-NMR (JEOL GX-500). A 5% aqueous solution of the purified, modified PVA was made into a cast film of 10 μm thick, which was then vacuum-dried at 80 °C for one day and then measured for the melting point using DSC in the manner described above. The melting point was 206 °C.

EXAMPLE 1

The water-soluble, thermoplastic PVA (sea component) produced in Production Example 2 and an isophthalic acid-modified polyethylene terephthalate (degree of modification of 6 mol %, island component) were extruded at 260 °C from a spinneret for melt composite spinning (number of islands: 25 per one microfine fiber-forming fiber) in a sea component/island component ratio of 30/70 (by mass). The ejector pressure was regulated such that the spinning speed was 4500 m/min. The microfine fiber-forming long fibers having an average fineness of 2.0 dtex were collected on a net, to obtain a long fiber web having a mass per unit area of 30 g/m$^2$.

Then, 12 pieces of long fiber webs were superposed by crosslapping to obtain a superposed long fiber web having a mass per unit area of 350 g/m$^2$.

After spraying an oil agent for preventing needle break, the superposed long fiber web was pre-entangled by a needle punching at a punching density of 40 punch/cm$^2$ to obtain an entangled long fiber web. Then, the polyurethane nonwoven fabric (elastic polymer sheet) obtained in Production Example 1 and the entangled long fiber web were successively superposed on the brush belt of a velour needle punching machine. The superposed body was subjected to a velour needle punching from the side of the entangled long fiber web using crown needles (tip-to-barb distance: 3 mm; throat depth: 0.04 mm) at a total density of 500 punch/cm$^2$ and a punching depth of 10 mm while allowing the microfine fiber-forming long fibers constituting the entangled long fiber web to pass through the polyurethane nonwoven fabric. Thereafter, the superposed body was subjected to a needle punching alternately from both sides at a density of 1000 punch/cm$^2$ and a punching depth of 8 mm using single-barb needles (tip-to-barb distance: 3 mm; throat depth: 0.04 mm) to unite the entangled long fiber web and the polyurethane nonwoven fabric, thereby obtaining a composite nonwoven fabric.

The composite nonwoven fabric was added with 30 % by mass of water based on the amount of PVA and heat-treated at a relative humidity of 95% and 70 °C for 3 min by standing under stress-free conditions. The composite nonwoven fabric shrunk in TD and MD by the heat treatment to increase the apparent density, thereby obtaining a densified composite nonwoven fabric. The area retention after the heat shrinking was 50%. The densified composite nonwoven fabric was pressed by a hot roll at 110 °C, to obtain a composite nonwoven fabric with a smooth surface, which had a mass per unit area of 810 g/m$^2$ and an apparent density of 0.55 g/cm$^3$. The composite nonwoven fabric was impregnated with a 40% aqueous emulsion of polyether polyurethane ("Evafanol AP-12" manufactured by Nicca Chemical Co., Ltd.) and then dried at 110 °C, to obtain an elastic polymer-containing composite nonwoven fabric having a resin/fiber ratio (based on mass) of 2/98. Then, PVA was removed by dissolving in a hot water of 95 °C to convert the microfine fiber-forming long fibers to microfine long fibers, thereby obtaining a substrate for artificial leathers. The thickness of the nonwoven fabric layer A was 1.3 mm, the thickness of the elastic polymer sheet constituting the cushion layer B was 75 μm, and the thickness of the microfine fiber layer C was 50 μm. A polyurethane film of 50 μm thick which had been prepared on a releasing paper was adhered to the obtained substrate for artificial leathers using a two-part urethane adhesive. After sufficient drying and crosslinking reaction, the releasing paper was removed, to obtain a grain-finished artificial leather. Vertical cross sections taken along TD and MD of the obtained grain-finished artificial leather were observed under an electron microscope. The single fineness of the microfine long fibers was 0.1 dtex. The polyurethane nonwoven fabric (cushion layer B) was still in a nonwoven state and its surface was undulated with a height difference of 250 μm. The number of upward convexes was 2.7 and the height of void was 180 μm.

The obtained grain-finished artificial leather combined a softness without resistance and a stiff hand and had bent wrinkles with fullness.

EXAMPLE 2

A long fiber web adjusted so as to have an area retention of 75% was produced in the same manner as in Example 1. Then, 18 pieces of long fiber webs were superposed by crosslapping, sprayed with an oil agent for preventing needle break and then pre-entangled by a needle punching at a punching density of 40 punch/cm$^2$ to obtain an entangled long fiber web. Then, the polyurethane nonwoven fabric (elastic polymer sheet) obtained in Production Example 1 and the entangled long fiber web were successively superposed on the brush belt of a velour needle punching machine. The superposed body was subjected to a velour needle punching from the side of the entangled long fiber web using crown needles (tip-to-barb distance: 3 mm; throat depth: 0.04 mm) at a total density of 500 punch/cm$^2$ and a punching depth of 10 mm while allowing the microfine fiber-forming long fibers constituting the entangled long fiber web to penetrate through the polyurethane nonwoven fabric. Thereafter, the superposed body was subjected to a needle punching alternately from both sides at a density of 1000 punch/cm$^2$ and a punching depth of 8 mm using single-barb needles (tip-to-barb distance: 3 mm; throat depth: 0.04 mm) to unite the entangled long fiber web and the polyurethane nonwoven fabric, thereby obtaining a composite nonwoven fabric.

The composite nonwoven fabric was added with 30 % by mass of water based on the amount of PVA and heat-treated at a relative humidity of 95% and 70 °C for 3 min by standing under stress-free conditions. The composite nonwoven fabric shrunk in TD and MD by the heat treatment to increase the apparent density, thereby obtaining a densified composite nonwoven fabric. The area retention after the heat shrinking was 75%. The densified composite nonwoven fabric was pressed by a hot roll at 110 °C, to obtain a composite nonwoven fabric with a smooth surface, which had a mass per unit area of 790 g/m$^2$ and an apparent density of 0.55 g/cm$^3$. The composite nonwoven fabric was impregnated with a 40% aqueous emulsion of polyether polyurethane ("Evafanol AP-12" manufactured by Nicca Chemical Co., Ltd.) and then dried at 110 °C, to obtain an elastic polymer-containing composite nonwoven fabric having a resin/fiber ratio (based on mass) of 10/90. Then, PVA was removed by dissolving in a hot water of 95 °C to convert the microfine fiber-forming long fibers to microfine long fibers, thereby obtaining a substrate for artificial leathers. The thickness of the nonwoven fabric layer A was 1.3 mm, the thickness of the cushion layer B was 190 $\mu$m, and the thickness of the microfine fiber layer C was 40 $\mu$m. A polyurethane film of 50 $\mu$m thick which had been prepared on a releasing paper was adhered to the obtained substrate for artificial leathers using a two-part urethane adhesive. After sufficient drying and crosslinking reaction, the releasing paper was removed, to obtain a grain-finished artificial leather. Vertical cross sections taken along TD and MD of the obtained grain-finished artificial leather were observed under an electron microscope. The single fineness of the microfine long fibers was 0.1 dtex. The polyurethane nonwoven fabric (cushion layer B) was still in a nonwoven state and its surface was undulated with a height difference of 190 $\mu$m. The number of upward convexes was 1.6 and the height of void was 100 $\mu$m. The obtained grain-finished artificial leather combined a softness without resistance and a stiff hand and had bent wrinkles with fullness.

COMPARATIVE EXAMPLE 1

A grain-finished artificial leather was produced in the same manner as in Example 1 except for omitting the use of the polyurethane nonwoven fabric. The obtained grain-finished artificial leather had a good hand, but the bent wrinkles lacked fullness.

COMPARATIVE EXAMPLE 2

A grain-finished artificial leather was produced in the same manner as in Example 1 except for changing the area retention to 95% by heat-treating at 150 °C. Vertical cross sections taken along TD and MD of the obtained grain-finished artificial leather were observed under an electron microscope. The single fineness of the microfine long fibers was 0.07 dtex. The polyurethane nonwoven fabric (cushion layer B) was still in a nonwoven state, but its surface was substantially not undulated. The height difference was 40 $\mu$m. The number of upward convexes was 0.4 and the height of void was 20 $\mu$m. The obtained grain-finished artificial leather had a softness without resistance, but lacked a dense feeling and had bent wrinkles with little fullness.

The measured results of Examples 1 and 2 and Comparative Examples 1 and 2 are shown in Table 1.

Table 1

|  | Examples | | Comparative Examples | |
|---|---|---|---|---|
|  | 1 | 2 | 1 | 2 |
| Undulation height ($\mu$m) | 250 | 190 | - | 40 |
| Number of undulation (per mm) | 2.7 | 1.6 | - | 0.4 |

(continued)

| | Examples | | Comparative Examples | |
|---|---|---|---|---|
| | 1 | 2 | 1 | 2 |
| Height of void ($\mu$m) | 180 | 100 | - | 20 |
| Number of voids (per mm) | 2.1 | 1.2 | - | 0.1 |
| Substrate for artificial leathers | | | | |
|     thickness (mm) | 1.36 | 1.39 | 1.28 | 1.33 |
|     specific gravity | 0.53 | 0.46 | 0.49 | 0.44 |
| Hand | A | B | A | B |
| Fullness | B | A | D | D |

INDUSTRIAL APPLICABILITY

In the substrate for artificial leathers and the production method thereof of the present invention, various combinations of microfine fibers and elastic polymers for constituting artificial leathers are usable. Therefore, a substrate for artificial leathers capable of producing grain-finished artificial leathers which combine a softness without resistance and a stiff hand resembling tanned natural sheep leathers and have bent wrinkles with fullness is obtained. The artificial leathers produced from the substrate for artificial leathers of the present invention are applicable to leather products such as shoes, balls, furniture, vehicle seats, clothes, gloves, baseball gloves, brief cases, belts and bags.

**Claims**

1.  A substrate for artificial leathers which comprises a united laminate of a nonwoven fabric layer A comprising bundles of microfine fibers having an average single fiber fineness of 0.5 dtex or less and a cushion layer B comprising an elastic polymer sheet, in which a part of the microfine fibers constituting the nonwoven fabric layer A penetrates through the cushion layer B to form a microfine fiber layer C on an outer surface of the cushion layer B, the elastic polymer sheet has an undulated inner surface with a height difference of 100 $\mu$m or more in a thickness direction, and voids having a height of 100 $\mu$m or more in a thickness direction are formed between the undulated surface of the elastic polymer sheet and the nonwoven fabric layer A.

2.  The substrate for artificial leathers according to claim 1, wherein the microfine fibers constituting the nonwoven fabric layer A are long fibers.

3.  The substrate for artificial leathers according to claim 1 or 2, wherein the bundles of the microfine fibers constituting the nonwoven fabric layer A are formed by removing a water-soluble, thermoplastic polyvinyl alcohol resin by extraction from microfine fiber-forming fibers which contain the water-soluble, thermoplastic polyvinyl alcohol resin as one of components.

4.  A method of producing a substrate for artificial leathers which comprises a united laminate of a nonwoven fabric layer A comprising bundles of microfine fibers having an average single fiber fineness of 0.5 dtex or less and a cushion layer B comprising an elastic polymer sheet, in which a part of the microfine fibers constituting the nonwoven fabric layer A penetrates through the cushion layer B to form a microfine fiber layer C on an outer surface of the cushion layer B, the elastic polymer sheet has an undulated inner surface with a height difference of 100 $\mu$m or more in a thickness direction, and voids having a height of 100 $\mu$m or more in a thickness direction are formed between the undulated surface of the elastic polymer sheet and the nonwoven fabric layer A, the method comprising the following steps 1 to 5 in an order of step 1, step 2, step 3, step 4 and step 5 or in an order of step 1, step 2, step 3, step 5 and step 4:

    step 1 of making microfine fiber-forming fibers which are capable of forming the microfine fibers having an average single fiber fineness of 0.5 dtex or less into a fiber web;
    step 2 of forming a composite nonwoven fabric by superposing the fiber web obtained in step 1 and the elastic polymer sheet and needle-punching the superposed body so as to allow a part of the microfine fiber-forming fibers constituting the fiber web to penetrate through the elastic polymer sheet to form a layer of the penetrated microfine fiber-forming fibers on an outer surface of the elastic polymer sheet, wherein the needle punching is performed at least partly by needle-punching the fiber web from its outer surface side while holding the microfine fiber-forming fibers which penetrate through the elastic polymer sheet and outwardly project from the outer surface of the elastic polymer sheet in a brush belt which is disposed so as to come into contact with the outer surface of the elastic polymer sheet;

step 3 of heat-shrinking the composite nonwoven fabric obtained in step 2 to make an inner surface of the elastic polymer sheet into an undulated form;

step 4 of impregnating the heat-shrunk, composite nonwoven fabric obtained in step 3 with a solution or dispersion of an elastic polymer in a non-solvent to the elastic polymer sheet and coagulating the elastic polymer; and

step 5 of converting the microfine fiber-forming fibers to the bundles of microfine fibers.

# Fig. 1

# Fig. 2

<div align="center">

**INTERNATIONAL SEARCH REPORT**

</div>

| | International application No. |
|---|---|
| | PCT/JP2007/050413 |

**A. CLASSIFICATION OF SUBJECT MATTER**
*D06N3/00*(2006.01)i, *D01F8/10*(2006.01)i, *D04H1/42*(2006.01)i, *D04H1/46*(2006.01)i, *D06M11/00*(2006.01)i, *D06M11/05*(2006.01)i

According to International Patent Classification (IPC) or to both national classification and IPC

**B. FIELDS SEARCHED**

Minimum documentation searched (classification system followed by classification symbols)
D06N3/00, D01F8/10, D04H1/42, D04H1/46, D06M11/00, D06M11/05

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-171426 A (Kuraray Co., Ltd.), 30 June, 2005 (30.06.05), Full text & US 2005-0125907 A1 & EP 001541750 A2 | 1-4 |
| A | JP 2002-194678 A (Kuraray Co., Ltd.), 10 July, 2002 (10.07.02), Full text (Family: none) | 1-4 |
| A | JP 2001-348786 A (Teijin Ltd.), 21 December, 2001 (21.12.01), Full text (Family: none) | 1-4 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 April, 2007 (16.04.07) | 24 April, 2007 (24.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/050413 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2000-273769 A (Teijin Ltd.), 03 October, 2000 (03.10.00), Full text (Family: none) | 1-4 |
| A | JP 60-071775 A (Toray Industries, Inc.), 23 April, 1985 (23.04.85), Full text (Family: none) | 1-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63005518 B
- JP 4185777 A
- JP 2000273769 A
- JP 2003013369 A